# EUROPÄISCHE PATENTSCHRIFT

(11) **EP 3 246 773 B1**
(45) Veröffentlichungstag und Bekanntmachung des Hinweises auf die Patenterteilung: **04.11.2020**
(21) Anmeldenummer: 16170003.4
(22) Anmeldetag: 17.05.2016
(51) Int. Cl.: G05B 19/05

(54) **VERFAHREN ZUR PARAMETRIERUNG EINER VERFAHRENS- ODER PROZESSTECHNISCHEN ANLAGE**
METHOD FOR PARAMETERISATION A PROCESS TECHNOLOGY SYSTEM
PROCEDE DE PARAMÉTRAGE D'UNE INSTALLATION TECHNIQUE DE PROCESSUS OU DE PROCEDE

(43) Veröffentlichungstag der Anmeldung: 22.11.2017
(73) Patentinhaber: Siemens Aktiengesellschaft, 80333 München (DE)
(72) Erfinder: Maurmaier, Mathias, 70839 Gerlingen (DE); Stutz, Andreas, 76344 Eggenstein-Leopoldshafen (DE)

(56) Entgegenhaltungen:
- DE-A1-102010 026 494
- JP-A- 2004 126 817
- US-B1- 7 151 966

## Beschreibung

Die Erfindung betrifft ein Verfahren zur Parametrierung einer verfahrens- oder prozesstechnischen Anlage mit zumindest einem Funktionsmodul, wobei das Funktionsmodul eine speicherprogrammierbare Steuerung (SPS) und ein mittels der SPS steuer- und/oder regelbares verfahrens- oder prozesstechnisches Modul zur Verwendung als Anlagenteil umfasst.

Um das Engineering einer Automatisierung einer verfahrens- oder prozesstechnischen Anlage, im Folgenden kurz Anlage genannt, durchzuführen, wird in einem Anlagen-Engineering-Werkzeug üblicherweise in einem ersten Schritt die Struktur der Anlage erfasst und mittels des Werkzeugs ein R&I-Fließschema der Anlage oder von Teilen der Anlage durch Verknüpfung von graphischen Prozessobjekten erstellt. Die graphischen Prozessobjekte repräsentieren die für den Betrieb der Anlage erforderlichen Komponenten, zum Beispiel Sensoren, Motoren, Pumpen, Ventile, Rohrleitungen, Tanks, Reaktoren etc., oder sie repräsentieren Funktionsmodule, die im Zuge einer zunehmenden Modularisierung verfahrens- oder prozesstechnischer Anlagen vermehrt eingesetzt werden. Der Trend in der Verfahrens- und Prozesstechnik geht nämlich hin zu Modulen mit definierten Grundoperationen und zu deren Bereitstellung als funktionale Einheiten, den so genannten Funktionsmodulen. Im Hinblick auf die einfache Realisierbarkeit der funktionalen Aspekte der Module aus der Sicht des Engineerings der Automatisierung ist es dabei von Vorteil, wenn die Funktionsmodule mit einer eigenen Intelligenz in Form einer SPS ausgestattet sind. Die hierfür einsetzbaren Steuerungen, häufig auch als Program Logic Controller (PLC) bezeichnet, stammen unter Umständen von verschiedenen Herstellern, das heißt verschiedene in einer Anlage eingesetzte Funktionsmodule können mit voneinander abweichenden Steuerungen unterschiedlicher Hersteller ausgestattet sein. Für das Engineering der Anlage muss der Anwender dann in nachteiliger Weise Engineering-Werkzeuge sämtlicher Hersteller von Steuerungen, die in Funktionsmodulen der jeweiligen Anlage eingesetzt werden, vorhalten und anwenden können. Die Integration der Funktionsmodule sowie das Ändern oder Anpassen von Funktionen der Module zum Zeitpunkt ihrer Integration in die Anlage sind daher in nachteiliger Weise mit vergleichsweise hohem Aufwand verbunden.

Aus der DE 10 2010 026 494 A1 ist ein Verfahren zum Engineering eines Funktionsmoduls mit flexibel ausbaubarer Hardwarestruktur bekannt. Zur Vereinfachung der Konfiguration der im Funktionsmodul eingesetzten Steuerung je nach Ausbau der Hardwarestruktur wird mittels eines Modul-Engineering-Werkzeugs ein Steuerungsprojekt für maximalen Ausbau erstellt und gemeinsam mit einer Änderungssoftware, in welcher in Form einer Datei Änderungsinformationen enthalten sind, in eine Steuerung des Funktionsmoduls geladen.

Aus der US 7,151,966 B1 ist ein Verfahren zum Engineering einer industriellen Anlage bekannt, gemäß welchem die Komponenten der Anlage je nach ihren verfügbaren Ressourcen ihre Dienste als Webservices innerhalb eines Steuerungsnetzwerks anbieten.

Aus der US 8,849,431 B2 ist bekannt, ein Anwendungsprogramm einer SPS mit Hilfe einer Datei zu konfigurieren, die Informationen zu einer gewünschten Anzahl von Instanzen und zu einer gewünschten Modulkonfiguration des Anwenderprogramms enthält. Die Konfigurationsdatei wird dabei von einem herstellerspezifischen Konfigurationsgerät in die SPS geladen. Das hat den Nachteil, dass zum Engineering der Anlage wiederum Konfigurationsgeräte der verschiedenen Hersteller bereit gehalten werden müssen.

In der JP 2004 126817 A ist ein Einstellungswerkzeug und ein dazugehöriges Computerprogrammprodukt offenbart.

Der Erfindung liegt daher die Aufgabe zugrunde, ein Verfahren zum Engineering einer verfahrens- oder prozesstechnischen Anlage mit zumindest einem Funktionsmodul zu finden, das sich durch geringeren Aufwand auszeichnet.

Zur Lösung dieser Aufgabe weist das neue Parametrierungsverfahren die in Anspruch 1 genannten Merkmale auf. Vorteilhafte Weiterbildungen der Erfindung sind in den abhängigen Ansprüchen beschrieben.

Die Erfindung hat den Vorteil, dass eine verfahrens- oder prozesstechnische Anlage mit mehreren Funktionsmodulen, die mit Steuerungen verschiedener Hersteller ausgestattet sein können, ohne die jeweiligen herstellerspezifischen Engineering-Werkzeuge der Steuerungshersteller engineert werden kann. Der Anwender der Anlage muss sich beim Engineering seiner Anlage nicht mehr mit den verschiedenen Engineering-Werkzeugen der Steuerungshersteller befassen und sich nicht mehr das zur Bedienung dieser Werkzeuge erforderliche Spezialwissen aneignen. Für das Engineering der Anlage kann der Anwender nun vorteilhaft mit einem einzigen Anlagen-Engineering-Werkzeug auskommen.

Das Engineering des Funktionsmoduls, welches für einen Einsatz in der Anlage vorgesehen ist, kann beim Modulhersteller durchgeführt werden. Der Hersteller des Funktionsmoduls seinerseits kann dazu spezielle Engineering-Werkzeuge verwenden, die spezifisch für den jeweiligen Hersteller der im Modul verwendeten SPS sind. Dem Modulhersteller wird somit voller Zugriff auf die Projektierung der Steuerung bei der Automatisierung des Funktionsmoduls gegeben.

Dagegen muss einem Anwender des Funktionsmoduls zum Engineering der jeweiligen Anlage, in welcher das Modul eingesetzt wird, und insbesondere zur Integration des Funktionsmoduls in die Anlage kein vollständiger Zugriff auf die Projektierung der SPS des Funktionsmoduls gegeben werden. Durch bestimmte Parameter, die der Modulhersteller dem Anwender offenlegt, können die verschiedenen, durch den Modulhersteller realisierten funktionalen Services des Moduls aktiviert und/oder parametriert werden, so dass eine Individualisierung des Funktionsmoduls je nach Anforderungen des Anwenders ermöglicht wird.

Der Hersteller des Funktionsmoduls erstellt dazu ein durch Parameter konfigurierbares Anwenderprogramm für eine zum Zeitpunkt der Programmerstellung frei programmierbare SPS. Dies geschieht beim Hersteller mittels eines Werkzeugs, welches zum Engineering der jeweiligen SPS und damit zum Engineering des mit der SPS versehenen Funktionsmoduls ausgebildet ist. Mittels des Werkzeugs wird das so erstellte Anwenderprogramm übersetzt und durch den Modulhersteller in die SPS heruntergeladen. Die SPS ist nun mit einem durch Parameter konfigurierbaren Anwenderprogramm versehen. Durch das Modul Engineering-Werkzeug, welches zum Engineering der SPS ausgebildet ist, kann beim Übersetzen des Anwenderprogramms automatisch eine Datei erstellt werden, in welcher die Parameter, mit denen das Anwenderprogramm konfigurierbar ist, in einer formalen Beschreibungssprache als Informationen zur Funktionsmodulintegration enthalten sind. In vorteilhafter Weise wird durch diese Vorgehensweise zudem ein Schutz des Knowhows des Modulherstellers ermöglicht, da das Anwenderprogramm zwar konfigurierbar durch den Anwender des Funktionsmoduls aber nicht lesbar oder veränderbar durch diesen sein muss.

Für eine Auswahl und ein Festlegen der Parameter für seine anwendungsspezifische Konfiguration des Funktionsmoduls mittels des Anlagen-Engineering-Werkzeugs benötigt der Anwender lediglich Kenntnis darüber, mit welchen Parametern und wie das Funktionsmodul für eine gewünschte Funktion konfiguriert und/oder parametriert werden kann. Diese Kenntnis kann er aus der Datei mit den Informationen zur Funktionsmodulintegration erhalten. Die Festlegung der Parameter kann beispielsweise durch Eingaben des Anwenders in ein Anlagen-Engineering-Werkzeug mit einer menügeführten Bedienoberfläche erfolgen. Aufgrund der zuvor eingelesenen Datei mit den Informationen zur Funktionsmodulintegration kann der Anwender bei der Menüführung vorteilhaft zur Eingabe genau der Parameter aufgefordert werden, mit welchen das jeweilige Anwenderprogramm in der SPS des Funktionsmoduls konfigurierbar ist. Das Engineering der Anlage wird dadurch weiter vereinfacht. Mit dem Abspeichern der zuvor mittels des Anlagen-Engineering-Werkzeugs festgelegten Parameter in der SPS des Funktionsmoduls ist der Vorgang der Konfiguration des Anwenderprogramms abgeschlossen.

Wenn die Schnittstelle, über welche der Zugriff des Anlagen-Engineering-Werkzeugs zum Abspeichern der Parameter im Datenspeicher der SPS erfolgt, als Remote Procedure Call (RPC)-Schnittstelle ausgeführt und durch eine Beschreibung in der Electronic Device Description Language (EDDL) spezifiziert ist, kann vorteilhaft auf Technologien zurückgegriffen werden, die aus dem Bereich der Feldgeräteintegration bekannt und bewährt sind. Zudem können beim Anwender möglicherweise bereits vorhandene Engineering-Werkzeuge der Feldgeräteintegration nun auch zur Integration der Funktionsmodule in Anlagen angewendet werden.

Den Speicherbereich, der in der SPS für die Parameter zur anwendungsspezifischen Konfiguration des Funktionsmoduls vorgesehen ist, als Datenregister auszuführen, auf welches über die RPC-Schnittstelle azyklisch zugegriffen werden kann, ermöglicht dabei in vorteilhafterweise eine Änderung der Konfiguration des Funktionsmoduls auch während der Laufzeit der Anlage, so dass unter Umständen für Änderungen oder Anpassungen auf einen Anlagenstillstand und damit auf kostspielige Unterbrechungen der auf der Anlage ablaufenden Prozesse verzichtet werden kann.

Gemäß einer besonders vorteilhaften Ausgestaltung des Verfahrens werden die Parameter, durch welche das Anwenderprogramm konfigurierbar ist, im Anwenderprogramm mit entsprechenden Kennzeichnungen versehen, anhand welcher beim Übersetzen des Anwenderprogramms die Parameter automatisch aus dem Anwenderprogramm extrahierbar sind, so dass für die Parameter jeweils Speicherzellen im Speicherbereich der SPS automatisch reserviert werden können. Die oben beschriebene Kennzeichnung der Parameter kann besonders einfach dadurch erfolgen, dass im Anwenderprogramm den Parametern jeweils ein Attribut zugewiesen wird, welches diese als den Informationen zur Funktionsmodulintegration zugehörig kennzeichnet.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Beispiel einer verfahrens- oder prozesstechnischen Anlage und
- Figur 2: ein Blockschaltbild zur Verdeutlichung des Engineerings der Anlage.

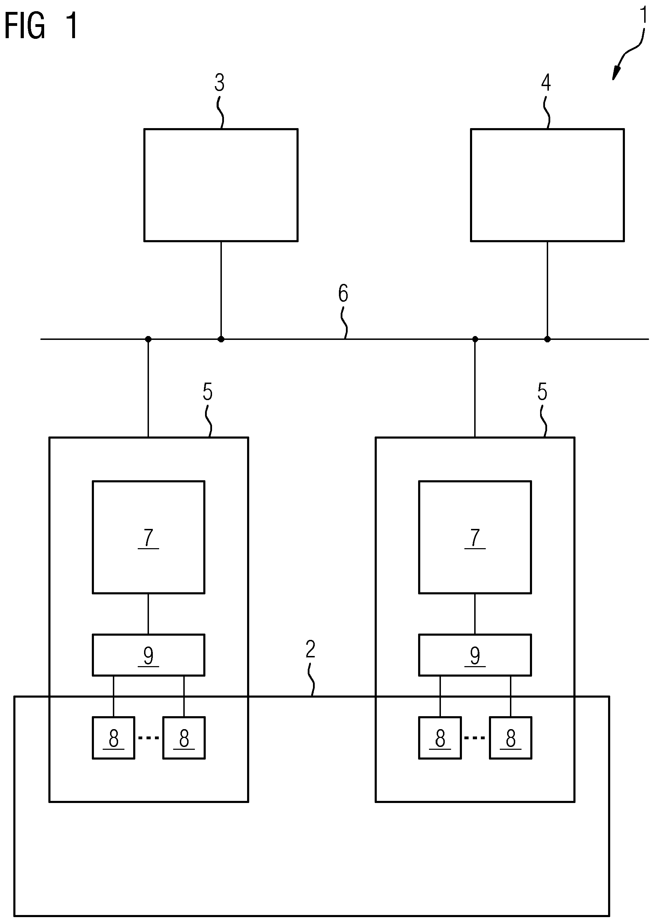

Figur 1 zeigt in vereinfachter schematischer Darstellung als Beispiel eine Anlage 1, in der ein Prozess 2 mittels eines Automatisierungssystems gesteuert wird. Das Automatisierungssystem enthält ein Engineering-Werkzeug 3, ein Bedien- und Beobachtungsgerät 4 und eine Vielzahl von Funktionsmodulen 5, die über ein Bussystem 6 zur Datenkommunikation miteinander verbunden sind. Der besseren Übersichtlichkeit wegen sind lediglich zwei Funktionsmodule 5 dargestellt. Die Funktionsmodule 5 steuern den Prozess 2 nach Maßgabe konfigurierbarer Anwenderprogramme, die in speicherprogrammierbaren Steuerungen 7 der Module 5 ablaufen. Zur Steuerung des Prozesses 2 werden weiterhin vielfältige Feldgeräte 8 eingesetzt, die beispielsweise über Geräte 9, so genannte dezentrale IO-Geräte, an die Steuerungen 7 angeschlossen sind. Bei den Feldgeräten 8 kann es sich beispielsweise um Messumformer handeln, welche zur Erfassung von Prozessvariablen dienen, wie beispielsweise Temperatur, Druck, Durchflussmenge, Füllstand, Dichte oder Gaskonzentration eines Mediums. Bei den Feldgeräten 8 kann es sich ebenso um Stellglieder handeln, durch welche der Prozessablauf in Abhängigkeit von erfassten Prozessvariablen den Vorgaben der in den Steuerungen 7 ablaufenden, konfigurierten Anwenderprogramme entsprechend beeinflusst werden. Als Beispiele für Stellglieder seien ein Regelventil, eine Heizung oder eine Pumpe genannt.

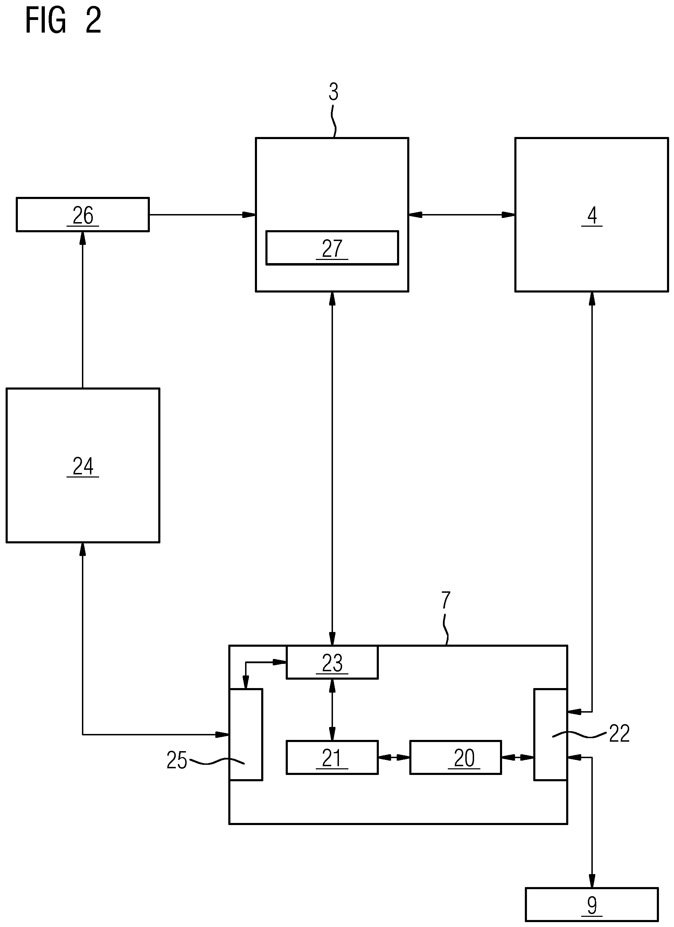

In Figur 2 sind die bereits in Figur 1 eingeführten Komponenten einer Anlage mit gleichen Bezugszeichen versehen.

Gemäß dem in Figur 2 dargestellten Ausführungsbeispiel wird zur Ermöglichung einer Konfiguration eines Anwenderprogramms 20 einer SPS 7 ein azyklisches Datenregister 21 verwendet, welches SPS-intern durch das konfigurierbare Anwenderprogramm 20 zur Ermöglichung eines Datenzugriffs des Anwenderprogramms 20 auf die für dieses zur Verfügung stehenden Konfigurationsparameter abgefragt und beschrieben werden kann. Das Anwenderprogramm 20 ist für den Hersteller eines Moduls frei programmierbar, später nach Auslieferung an den Modulanwender zur Ermöglichung eines Know-how-Schutzes vor einem unberechtigten Lesen oder Verändern je nach Vorgabe des Modulherstellers eventuell geschützt. Bei einer zyklischen Bearbeitung des Anwenderprogramms 20 in der SPS 7 werden Änderungen im Datenregister 21 ebenfalls zyklisch abgefragt. Dies ist vergleichbar mit dem Zugriff des Anwenderprogramms 20 auf ein Prozessabbild 22, welches für die Prozesseingänge und -ausgänge der SPS 7 gepflegt wird. Eine RPC-Schnittstelle 23 ermöglicht für das Engineering-Werkzeug 3, welches für das Anlagen-Engineering vorgesehen ist, einen azyklischen Zugriff auf das Datenregister 21. Die RPC-Schnittstelle 23 ist in einer Schnittstellenbeschreibung mit formaler Beschreibungssprache spezifiziert. Die Schnittstellenbeschreibung kann mit Sprachen, die aus der Feldgeräteintegration bekannt sind, realisiert werden. Eine geeignete Sprache ist beispielsweise EDDL.

Für das Engineering des Moduls selbst beim Modulhersteller, bei welchem unter anderem das konfigurierbare Anwenderprogramm 20 erstellt wird, kann dieser ein Modul-Engineering-Werkzeug 24 verwenden, welches spezifisch für den Hersteller der SPS 7 ist und eine ebenfalls herstellerspezifische Engineering-Schnittstelle 25 der SPS 7 für Zugriffe auf die SPS 7 nutzt. Parameter, mit deren Festlegung das Anwenderprogramm 20 konfigurierbar ist, können durch Zuweisung entsprechender Attribute im Anwenderprogramm 20 markiert werden. Eine dazu geeignete Programmzeile lautet beispielsweise EDDL_GROUP:="FC1013-Dosage Control"
in der Definition einer Liste von Systemattributen eines Funktionsblocks oder
EDDL:="true"
im Block der Definition einer Eingangsvariablen oder einer Ausgangsvariablen, welche Teil der RPC-Schnittstelle 23 sein soll. Die Konfigurationsparameter werden somit im Anwenderprogramm 20 gemäß dem hier beschriebenen Ausführungsbeispiel durch ein definiertes Flag markiert. Beim Modulhersteller wird mittels des Modul-Engineering-Werkzeugs 24 das fertige Anwenderprogramm, welches im Engineering-Werkzeug 24 als Source Code vorliegt, übersetzt und in die SPS 7 als ablauffähiges Anwenderprogramm 20 heruntergeladen. Beim Übersetzen werden die Parameter anhand beispielsweise der Flags ermittelt und Speicherzellen für die Variablen im azyklischen Datenregister 21 vorgesehen. Damit die zugeordneten Speicherzellen auch dem Anlagen-Engineering-Werkzeug 3 bekannt gemacht werden können, wird beim Übersetzen zusätzlich eine Datei 26 erstellt, in welcher die Paramater in einer formalen Beschreibungssprache, zum Beispiel EDDL, als Informationen zur späteren Integration des mit der SPS 7 ausgestatteten Moduls in einer Anlage (1 in Figur 1) enthalten sind. Die Bereitstellung der Datei 26 zur Verwendung beim Anlagen-Engineering erfolgt offline, beispielsweise durch Hinterlegung der Datei 26 in einer Datenbank des Modulherstellers, auf welche ein Anwender beim Anlagen-Engineering zugreifen kann. Das Anwenderprogramm 20 ist nach Fertigstellung des Moduls durch Konfiguration individualisierbar. Für das Anlagen-Engineering steht somit dem Anwender eine SPS 7 mit einem durch Parameter konfigurierbaren Anwenderprogramm 20 und mit einem Datenregister 21 für die Parameter zur Konfiguration des Anwenderprogramms 20 zur Verfügung. Zudem wird ihm eine Datei bereitgestellt, in welcher die Parameter in einer formalen Beschreibungssprache als Informationen zur Funktionsmodulintegration enthalten sind. Vorteilhaft werden somit für die Individualisierung und Anpassung des Funktionsmoduls beim Engineering der Anlage keinerlei Engineering-Werkzeuge mehr benötigt, die spezifisch für den Hersteller der SPS 7 sind.

Das Engineering der Anlage wird vorteilhaft mit dem Anlagen-Engineering-Werkzeug 3 durchgeführt. Dieses kann ein Werkzeug 27 zur Geräteintegration enthalten, das ähnlich dem Werkzeug Simatic PDM ausgeführt sein kann, welches bereits zur Feldgeräteintegration bekannt ist. Für das Anlagen-Engineering verfügt ein Anwender üblicherweise bereits über ein derartiges Integrationswerkzeug 27, welches nun auch für die Integration des Funktionsmoduls in die Anlage genutzt werden kann. Die Parameter im azyklischen Datenregister 21 werden durch den Anwender mit Hilfe des Anlagen-Engineering-Werkzeugs 3 auf der Basis der Datei 26 festgelegt und über die RPC-Schnittstelle 23 in das Datenregister 21 geschrieben. Durch die Entkopplung dieses Zugriffs auf das Datenregister 21 vom zyklischen Datenzugriff durch das Anwenderprogramm 20 kann in vorteilhafter Weise die Konfiguration des Anwenderprogramms 20 während dessen Laufzeit durchgeführt werden. Konfigurationsmöglichkeiten sind beispielsweise das Sperren oder Freigeben von Meldungen sowie das Aktivieren, Deaktivieren, Anpassen von funktionalen Teilen des Anwenderprogramms 20. Vorteilhaft benötigt ein Anwender zur Konfiguration und Anpassung der in seiner Anlage verwendeten Funktionsmodule keine steuerungsspezifischen Engineering-Werkzeuge mehr, sondern er kann mit einem Engineering-Werkzeug 3, welches unabhängig von den Herstellern der in den Funktionsmodulen verwendeten Steuerungen 7 ist, alle in seiner Anlage eingesetzten Funktionsmodule konfigurieren.

Die mit einer formalen Beschreibungssprache spezifizierte RPC-Schnittstelle 23 kann ergänzend zur Konfiguration des Anwenderprogramms 20 auch zur Übertragung von Diagnosedaten der SPS 7 oder des Anwenderprogramms 20 genutzt werden.

Ein Funktionsmodul dient allgemein zur Ausführung einer verfahrens- oder prozesstechnischen Grundoperation oder Grundreaktion. Dabei kann unterschieden werden, ob es sich um einen Hilfsprozess handelt, der durch eine Package Unit realisiert wird, oder um eine Funktion, die im aktiven Reaktionsprozess eingesetzt wird. Auch der Einsatz eines Funktionsmoduls innerhalb einer diskreten oder hybriden Anlage ist möglich. Ein Beispiel für ein Modul aus einer hybriden Anlage ist eine Abfüllmaschine. Der eigentliche Produktionsprozess kann dabei als kontinuierlicher Prozess oder als Batch-Prozess ausgelegt sein, der Abfüllprozess diskret.

Ein weiteres Beispiel für ein Funktionsmodul ist ein Temperiermodul, welches die Funktion des Beheizens oder Kühlens eines Objekts, beispielsweise mit umströmendem Wasser, bereitstellt. Beispielsweise bei einer Realisierung eines derartigen Moduls mit einem doppelwandigen Glasreaktor stellt dieser ein verfahrens- oder prozesstechnisches Modul zur Verwendung als Teil der Anlage dar. Wird der Glasreaktor in einer warmen Umgebung betrieben, ist der Temperaturverlust beim Heizen deutlich geringer als bei einem Betrieb in kalter Umgebung. Dies führt zu abweichenden Streckenzeitkonstanten und somit zu unterschiedlicher Reglerparametrierung. Eine entsprechende Anpassung der Reglerparameter konnte bisher ohne ein herstellerspezifisches Engineering-System für die SPS nicht realisiert werden. Mit dem neuen Engineering-Verfahren kann dagegen die Konfiguration und Neuparametrierung des Funktionsmoduls mit einem Engineering-Werkzeug vorgenommen werden, welches unabhängig vom jeweiligen Hersteller der SPS ist.

Bei einem Funktionsmodul zur Dosierung in einer prozesstechnischen Anlage ergibt sich eine ähnliche Situation. Reglerparameter für Pumpen oder Durchflussregelungen sind abhängig davon, welche Viskosität ein zu dosierendes Medium besitzt. Zähflüssige Medien können nicht mit der gleichen Durchflussrate wie beispielsweise Wasser gepumpt werden. Diese Unterschiede können durch Parametrierung über die RPC-Schnittstelle 23 ohne Verwendung eines herstellerspezifischen Engineering-Werkzeugs an das Anwenderprogramm 20 übergeben werden.

Bei allen Fällen, in welchen eine steuerungs- oder regelungstechnische Funktion je nach Umgebung unterschiedlich zu parametrieren ist, kann das neue Engineering-Verfahren vorteilhaft angewendet werden. Für Hersteller von Funktionsmodulen hat das neue Engineering-Verfahren den Vorteil, dass sie das Anwenderprogramm 20 für das Funktionsmodul zur Realisierung der gewünschten Funktionen nur einmal programmieren müssen. Die Anpassung und Integration des Funktionsmoduls in die jeweilige Anlage kann durch Parametrierung des Funktionsmoduls mittels eines herstellerunabhängigen Engineering-Werkzeugs 3 erfolgen. Für den Hersteller des Funktionsmoduls wird zudem die Möglichkeit geschaffen, einen Know-how-Schutz zu betreiben, durch die Parametrierung aber dennoch eine hohe Flexibilität in der Anwendung des Funktionsmoduls zu erhalten. Dabei kann in vorteilhafter Weise verhindert werden, dass Personen unberechtigterweise, beispielsweise wegen fehlender Kenntnisse, Veränderungen unmittelbar am Anwenderprogramm 20 vornehmen, die möglicherweise zu einer Störung des Anlagenbetriebs führen könnten.

## Patentansprüche

1. Verfahren zur Parametrierung einer verfahrens- oder prozesstechnischen Anlage (1) mit zumindest einem Funktionsmodul (5), wobei das Funktionsmodul (5) eine speicherprogrammierbare Steuerung (7) und ein mittels der speicherprogrammierbaren Steuerung (7) steuer- und/oder regelbares verfahrens- oder prozesstechnisches Modul zur Verwendung als Teil der Anlage umfasst und wobei die speicherprogrammierbare Steuerung (7) zumindest ein durch Parameter konfigurierbares Anwenderprogramm (20), einen Speicherbereich (21), der für die Parameter zur anwendungsspezifischen Konfiguration des Funktionsmoduls (5) vorgesehen ist, und eine Schnittstelle (23) aufweist, die durch eine Beschreibung in einer formalen Beschreibungssprache spezifiziert ist und über welche der Speicherbereich (21) mit Parametern beschreibbar ist, wobei das Verfahren die folgenden Schritte umfasst:
- Bereitstellen einer dem konfigurierbaren Anwenderprogramm (20) entsprechenden Datei (26), welche mittels eines für einen Hersteller der Steuerung (7) spezifischen Modul-Engineering-Werkzeugs (24) erstellt ist und in welcher die Parameter in einer formalen Beschreibungssprache als Informationen zur Funktionsmodulintegration enthalten sind,
- Einlesen der Datei (26) mit den Informationen zur Funktionsmodulintegration in ein Werkzeug (3), welches zum Engineering der Anlage (1) ausgebildet und unabhängig vom Hersteller der Steuerung (7) ist,
- Festlegen der Parameter zur anwendungsspezifischen Konfiguration des Funktionsmoduls (5) mittels des Anlagen-Engineering-Werkzeugs (3) und
- Abspeichern der zuvor festgelegten Parameter mittels des Anlagen-Engineering-Werkzeugs (3) in den Speicherbereich (21) durch Zugriff über die Schnittstelle (23) auf Basis der Beschreibung der Schnittstelle (23).

2. Verfahren nach Anspruch 1, **dadurch gekennzeichnet, dass** der Speicherbereich (21) als Datenregister ausgeführt ist, auf welches azyklisch über die Schnittstelle (23) zugreifbar ist.

3. Verfahren nach einem der vorhergehenden Ansprüche, **dadurch gekennzeichnet, dass** die Parameter, durch welche das Anwenderprogramm (20) konfigurierbar ist, im Source Code des Anwenderprogramms (20) mit entsprechenden Kennzeichnungen versehen werden und dass mittels des Modul-Engineering-Werkzeugs (24), welches ferner zum Engineering der speicherprogrammierbaren Steuerung (7) ausgebildet ist, beim Übersetzen Source Codes in ein in die speicherprogrammierbare Steuerung (7) ladbares Anwenderprogramm (20) anhand der Kennzeichnungen die Parameter, durch welche das Anwenderprogramm (20) konfigurierbar ist, bestimmt werden und für die Parameter jeweils Speicherzellen im Speicherbereich (21) reserviert werden.

4. Verfahren nach Anspruch 3, **dadurch gekennzeichnet, dass** den Parametern, durch welche das Anwenderprogramm (20) konfigurierbar ist, im Anwenderprogramm jeweils ein Attribut zugewiesen wird, welches die Parameter als den Informationen zur Funktionsmodulintegration zugehörig kennzeichnet.

## Claims

1. Method for parameterising a method- or process-engineering plant (1) with at least one function module (5), wherein the function module (5) comprises a stored program control (7) and a method- or process-engineering module that can be controlled or regulated by means of the stored program control (7) to be used as part of the plant and wherein the stored program control (7) comprises at least one parameter-configurable user program (20), a memory area (21) provided for the parameters for the application-specific configuration of the function module (5) and an interface (23), which is specified by a description in a formal description language and by means of which the memory area (21) with parameters can be described, wherein the method comprises the following steps:
- provision of a file (26) corresponding to the configurable user program (20) which is compiled by means of a module engineering tool (24) specific to a manufacturer of the control (7) and in which the parameters are contained in a formal description language as information for the integration of the function module,
- reading-in the file (26) with the information for the integration of the function module in a tool (3) embodied for the engineering of the plant (1) and independent of the manufacturer of the controller (7),
- definition of the parameters for the application-specific configuration of the function module (5) by means of the plant-engineering tool (3) and
- storing the previously defined parameters by means of the plant-engineering tool (3) in the memory area (21) by means of access via the interface (23), on the basis of the description of the interface (23).

2. Method according to claim 1, **characterised in that** the memory area (21) is designed as a data register that may be accessed acyclically via the interface (23).

3. Method according to one of the preceding claims, **characterised in that** the parameters by means of which the user program (20) can be configured are provided in the source code of the user program (20) with corresponding identifications and that, by means of the module-engineering tool (24), which is further embodied for the engineering of the stored program control (7), during the translation of source codes into a user program (20) that can be loaded into stored program control (7), the identifications enable the parameters by means of which the user program (20) can be configured to be determined and in each case storage cells to be reserved in the memory area (21) for the parameters.

4. Method according to claim 3, **characterised in that**, in the user program, the parameters by means of which the user program (20) can be configured are each assigned an attribute identifying the parameters as belonging to the information for the integration of the function module.

## Revendications

1. Procédé de paramétrage d'une installation (1) technique de procédé ou de processus ayant au moins un module (5) fonctionnel, le module (5) fonctionnel comprenant un automate (7) programmable et un module technique de procédé ou de processus ? pouvant être commandé et/ou régulé au moyen de l'automate (7) programmable, à utiliser comme partie de l'installation, et l'automate (7) programmable ayant au moins un programme (20) d'utilisateur configurable par paramètres, une partie (21) de mémoire, prévue pour les paramètres de configuration spécifiques à l'utilisation du module (5) fonctionnel, et une interface (23), qui est spécifiée par une description en une langue de description formelle et par laquelle la partie (21) de mémoire peut être décrite par des paramètres, le procédé comprenant les stades suivants :
- la mise à disposition d'un fichier (26), qui correspond au programme (20) d'utilisateur configurable, qui est établi au moyen d'un outil (24) d'ingénierie de module spécifique au fabricant de l'automate (7) et dans lequel les paramètres sont contenus, dans une langue de description formelle, comme informations pour l'intégration du module fonctionnel,
- l'introduction du fichier (26) ayant les informations d'intégration du module fonctionnel dans un outil (3), qui est constitué pour l'ingénierie de l'installation (1) et qui est indépendant du fabricant de l'automate (7),
- la fixation des paramètres de la configuration spécifique à l'utilisation du module (5) fonctionnel au moyen de l'outil (3) d'ingénierie d'installation et
- la mise en mémoire des paramètres fixés auparavant au moyen de l'outil (3) d'ingénierie d'installation dans la partie (21) de la mémoire par accès par l'intermédiaire de l'interface (23), sur la base de la description de l'interface (23).

2. Procédé suivant la revendication 1, **caractérisé en ce que** la partie (21) de la mémoire est réalisée en registre de données accessible de manière acyclique par l'intermédiaire de l'interface (23).

3. Procédé suivant l'une des revendications précédentes, **caractérisé en ce que** les paramètres, par lesquels le programme (20) d'utilisateur peut être configuré, sont pourvus, dans le code source du programme (20) d'utilisateur, de caractérisations correspondantes et **en ce que**, au moyen de l'outil (24) d'ingénierie de module constitué, en outre, pour l'ingénierie de l'automate (7) programmable, on détermine, à la traduction du code source en un programme d'utilisateur pouvant être chargé dans l'automate (7) programmable, à l'aide des caractérisations, les paramètres par lesquels le programme (20) d'utilisateur peut être configuré et on réserve pour les paramètres, respectivement, des cellules de mémoire dans la partie (21) de la mémoire.

4. Procédé suivant la revendication 3, **caractérisé en ce que**, aux paramètres, par lesquels le programme (20) d'utilisateur peut être configuré, on affecte dans le programme d'utilisateur, respectivement, un attribut, qui caractérise les paramètres comme appartenant aux information d'intégration du module fonctionnel.
